# EUROPEAN PATENT APPLICATION

(11) **EP 0 872 359 A2**
(43) Date of publication of application: **21.10.1998**
(21) Application number: 98302931.5
(22) Date of filing: 16.04.1998
(51) Int. Cl.: B60B 33/00, B62D 13/04, B60P 3/12

(54) **Self steering wheel assembly**

(30) Priority: 16.04.1997 GB 9707711; 13.02.1998 GB 9803092
(71) Applicant: Intertrade Engineering Limited, Royton, Oldham OL2 5BY (GB)
(72) Inventor: Rodgers, Peter, Chadderton, Oldham, OL1 2SP (GB)
(74) Representative: Phillips, Patricia Marie

(57) **Abstract**

A self steering wheel assembly for a trailer 18 having a tube 12 attached to a wheel 11, the tube having an angled upper end 14 and a king pin 15 secured to the wheel 11 via tube 12. A second tube 16 fixed to the trailer 18 is rotatably mounted to the king pin 15 and has a lower angled end 17 which nests with end 14 of tube 12. When the wheel 11 turns the tube 12 rotates such that point 26 on end 14 of the tube 12 moves along the inclined face 17 of tube 16 forcing the tube 16, and tehereby the trailers body 18, to rise in direction 26. Once the turn is complete the weight of the trailer 18 forces the tubes 12, 16 and king pin 15 to assume their original position.

## Description

The present invention relates to a self steering wheel assembly, and in particular, but not exclusively, to a side mounting self steering assembly without an attached steering mechanism.

There are many diverse applications which require the use of a self steering mechanism. For example, tea trolleys, supermarket trolleys, prams etc. Such applications' have castors with a pivot mounted on the centre line forward of the trailing wheel so the surface force generally keeps the trolley in the direction of travel, and trailing action permits the back wheels to follow in the direction of the front wheels. In such applications, there is no assisted self centre-ing action, just the trailing action.

Other applications, such as recovery vehicles, presently use systems where a steering mechanism is necessary and often cumbersome. For example, at present an existing recovery vehicle permanently tows a trailer, a unit with two wheels which will engage and support the front wheels of a damaged vehicle and tow the damaged vehicle to a garage. The disadvantage of this system is that the trailer has to be permanently towed as it cannot be dismantled and stored on the recovery vehicle.

The existing trailer is a wide track unit with a platform upon which the broken-down car wheels rest. This platform needs to be low for stability and to prevent the rear of the car, which still has its rear wheels on the road, from touching the road, especially if the boot is loaded with luggage or the car is fitted with a tow ball. As the platform is so low, the wheels of the trailer are required to be mounted on the outside as they need to steer and turn just as if they were the front wheels of a car otherwise they would "scrub" and suffer damage when the unit was laden and towed around corners.

The only method of steering these wheels has been by means of steering tie rods, connected to steering arms protruding from the stub axle assembly. The steering tie rods are connected to a pivoting drawbar. This drawbar pivots when the recovery vehicle turns corners or bends thus activating the steering mechanism. In this form, the trailer with the broken-down vehicle mounted on it is a dedicated trailer following the course set by the recovery vehicle.

Such a recovery unit has many problems. The first main problem being that the width of the unit has to be wide enough to accept the widest car and therefore when towing a narrow car, the unit protrudes excessively on either side. Because the wheel pans have to be wide enough to accept the outside track of the largest car and narrow enough to accept the inside track of the smallest car, they are by necessity, wide and heavy.

Due to the fixed steering mechanism, as outlined above, required by such a unit, it is impractical to make smaller wheel pans which adjusted in and out with unit wheels.

It is also impractical to make a steering mechanism which could adjust in and out and still maintain the parallel tracking of the trailer wheels as this would be extremely difficult to adjust at the roadside.

The present invention has been made with the above problems in mind.

It is an object of the present invention to provide independent side mounted auto steering wheels feasible in many applications, for example storage containers, machinery removal etc.

It is a further object of the present invention to provide a side mounted, self steering wheel assembly to be used with a recovery vehicle.

It is an object of the present invention to provide a self steering wheel assembly which can be easily dismantled, is light enough to lift and be stored on board a recovery vehicle or in the boot of a car.

It is a further object of the present invention that the wheel assembly does not protrude excessively from the towed vehicle and the assembly is fully adjustable to adapt to any sized vehicle.

According to the present invention there is provided a self steering wheel assembly which connects an individual wheel of a vehicle to its body, comprising a member which is adapted to be mounted to the wheel, and a member which is adapted to be fixed to the body with the members being pivotally connected at one side of the wheel and with the pivotal axis thereof, being inclined to the vertical such that a theoretical extension to the pivotal axis substantially intersects the longitudinal centre line of the wheel at the road surface. Preferably, the members are shaped such that rotation of the member connected to the wheel causes the other member to rise. Preferably, the members have correspondingly inclined surfaces such that as one member rotates, the highest point of the angled edge of its angled surface moves along the inclined edge of the inclined surface of the other member forcing it to rise.

In a further preferred embodiment of the invention, the inclined surfaces of the members are cut away at an angle between approximately 30-85°, preferably 50-60x further preferably 60-70° and most preferably 70°.

In a preferred embodiment of the invention, the members are concentric tubes and a pin sits inside the tubular structures and further preferably is secured to the lower tubular structure which is attached in use to the wheel. The pin ensures that the tubular structures do not slip across each other but remain flush. The one tubular structure moves along the length of the pin when forced to rise by rotation of the other tube.

The two tubular structures are cut so that their free ends can still rest against each other. When the wheel is in the straight position the tubular structures are positioned so there is no gap between them.

In use, the wheel turns a corner, this causes rotation of the lower tubular structure attached to the wheel which in turn moves along the inclined face of the other tubular structure, forcing it to rise. Consequently, the support assembly, which is attached to the wheel tubular structure, rises in corresponding fashion, allowing the wheel to turn without "scrubbing" against the vehicle body and suffering damage. The weight of the vehicle body, together with whatever load it is carrying, forces the pin and tubular structures to turn back and resume the lowest position so that the angled faces of the tubes nest again with one another, thus ensuring the wheel resumes the straight again position once the turn is complete.

To further ensure that there is no turning point on the wheel caused by the force at the road surface on the tyre, the angle of inclination of the pin, sitting within the tubular structures, is determined to suit the specified wheel and tyre, so that preferably, a theoretical centre line drawn down the pin would intersect or meet the centre of the tyre at the road surface. Any force exerted on the tyre by the friction of the road surface would be equal around this intersection point or hinge line, and therefore the turning moments equal themselves out.

Preferably, most types of wheel assemblies require the pin inclination angle to be approximately 10-25°, most preferably approximately 15°.

Further preferably, the pin is also inclined forwards to provide a castor angle of approximately 10-25°, most preferably approximately 13°. The castor angle can move the intersection point of the pivotal axis forward or rearward of the centre of the tyre at the road surface, but along the longitudinal centre line of the tyre.

The above angles together with the angled edged tubular structures provides the necessary stability and proper tracking of the wheels for auto steering of the complete assembly. The wheel will only turn to a degree proportional to the turn, forced to do so because of the turning force placed upon it and also because of the inbuilt castor angle and pin inclination angle which ensures the wheel trails properly.

Reversing of the wheel assembly may be achieved by mounting the tubular structure/pin assembly on a bush and a spigot on the side of the support assembly. A lever inserted in a socket will push forward the inclining pin in the opposite direction. This will switch the positive castor angle to a negative castor angle, enabling the whole assembly to reverse and manoeuvre as much as necessary.

Alternatively, limited reversing of the wheel assembly in a straight line, may be effected by engaging the pin into a lug welded into the pin bush, thus effectively stopping the pin and therefore the wheel from turning whilst reversing.

The self steering wheel assembly has the advantage that it can be utilized to connect the front wheels of a long wheeled based trailer or composite combination such as a towing implement and a broken-down vehicle, turning or steering the wheels upto 30 to 35 degrees independently of one another, to a degree proportional to the turn or corner, even turning a 90 degree corner in a similar manner to a car and self-centering effortlessly. Also, the assembly allows the axle to be a part of the chassis or frame of a trailer, or indeed to have no chassis at all and be side mounted and not underneath the vehicle.

In an alternative embodiment of the invention there is envisaged a vehicle recovery unit utilising the self steering wheel assembly of the present invention. The vehicle recovery unit comprises a trailer component which is towed by a recovery vehicle. The trailer component is adapted to carry either the two front wheels of the damaged vehicle, only a part of the damaged vehicle or the whole damaged vehicle.

Preferably, the self steering wheel assembly is utilised on the vehicle trailer component, the vehicle trailer may be dismantled and stored on the tow vehicle when it is not required.

In accordance with the present invention there is provided a vehicle recovery unit utilising a self steering assembly, comprising a vehicle trailer component having a support assembly of two wheel pans attached by an adjustable drawbar, and further preferably, the drawbar has a tow A-frame with an adjustable multi-positional crossbar. The wheel pans are adapted to support the front two wheels of the damaged vehicle being towed. This has the advantage that the width of the trailer can be adiusted to adapt the position of the wheel pans to match a variety of car widths. Therefore it is not necessary that the pans and the width of the trailer must be such that it will accept all sizes it is merely necessary for each pan to be adaptable to cope with at least the widest width of wheel.

At the point of the A-frame, there is preferably an eye type coupling, which may be a 50m/m ball bracket. Preferably, the shock absorber type coupling may be fitted with an over/run brake system. Also, the wheel pans may have fitted a rear wheel-chock and at the front of the wheel pan may be positioned a guide for webbing securing cradles. The webbing securing cradles fit around the wheels of the damaged vehicle, and extend along the A-frame, through ratchet buckle tensioners positioned along the A-frame to keep the webbing taut. The wheel pan may also have a spring loaded shoot bolt.

In a third embodiment of the present invention, the vehicle recovery unit comprises a detachable motorcycle carrier. Therefore, in use the trailer can be adjusted to its minimum width position and the motorcycle carrier attached. The carrier preferably comprises a channel at least part of which can be selectively lowered to the ground to provide an inclined surface to facilitate the loading of the motorbike onto the carrier. The trailer further having means to lift the inclined surface from the ground once the motorcycle is loaded.

In a fourth embodiment of the invention a wheel skate is provided which is adapted to hold the wheel of a broken-down vehicle, the skate having wheels which facilitate the loading of the vehicle onto the trailer. Preferably the trailer has a ramp with guide rails for the skate.

In a further embodiment of the invention, the self steering wheel assembly may also be used in the controlled movement of storage containers or machinery removal. Preferably, the self steering wheels are positioned at the front with locked wheels at the back and the container or load placed on the support assembly.

Specific embodiments of the invention will now be described by way of example with reference to the accompanying drawings in which:-
Fig. 1 is a perspective view of the self steering assembly on a trailer of a vehicle recovery unit in accordance with the present invention;
Fig. 2 is an illustration of the movement of the self steering wheel assembly on turning of the wheel;
Fig. 3 is a perspective view from above of a self steering wheel assembly, as part of the trailer of a vehicle recovery unit in accordance with the present invention;
Fig. 4 is a side view of the arrangement in Fig. 3;
Fig. 5 is a side view of a wheel skate;
Fig. 6 is a view similar to Fig. 3 illustrating modifications to the trailer; and
Fig. 7 is a side view of a further embodiment of wheel skate.

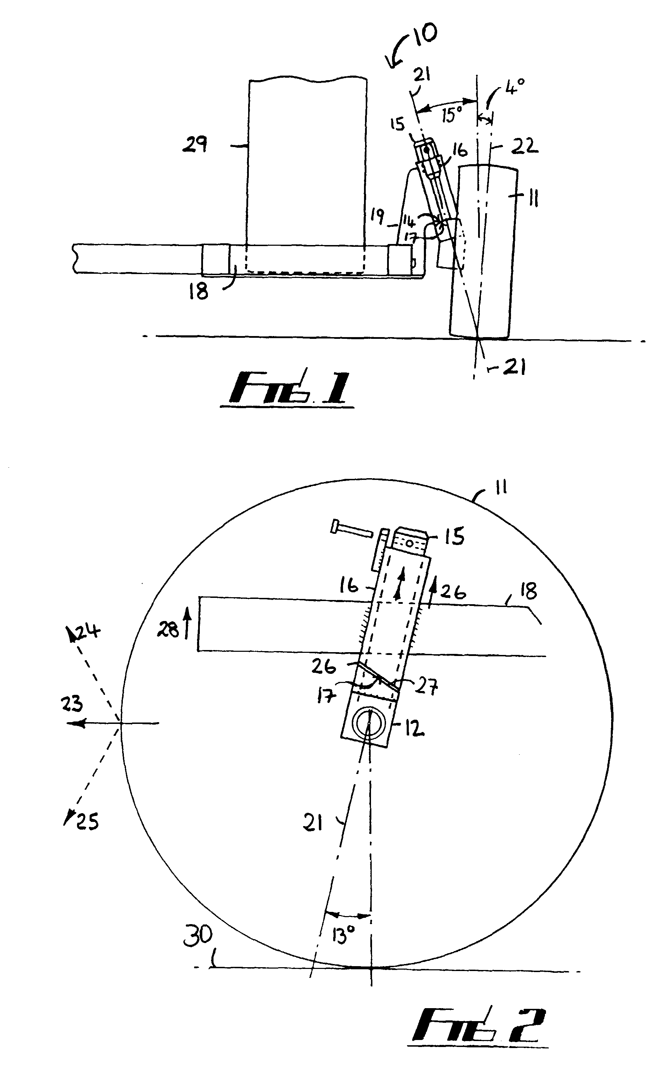

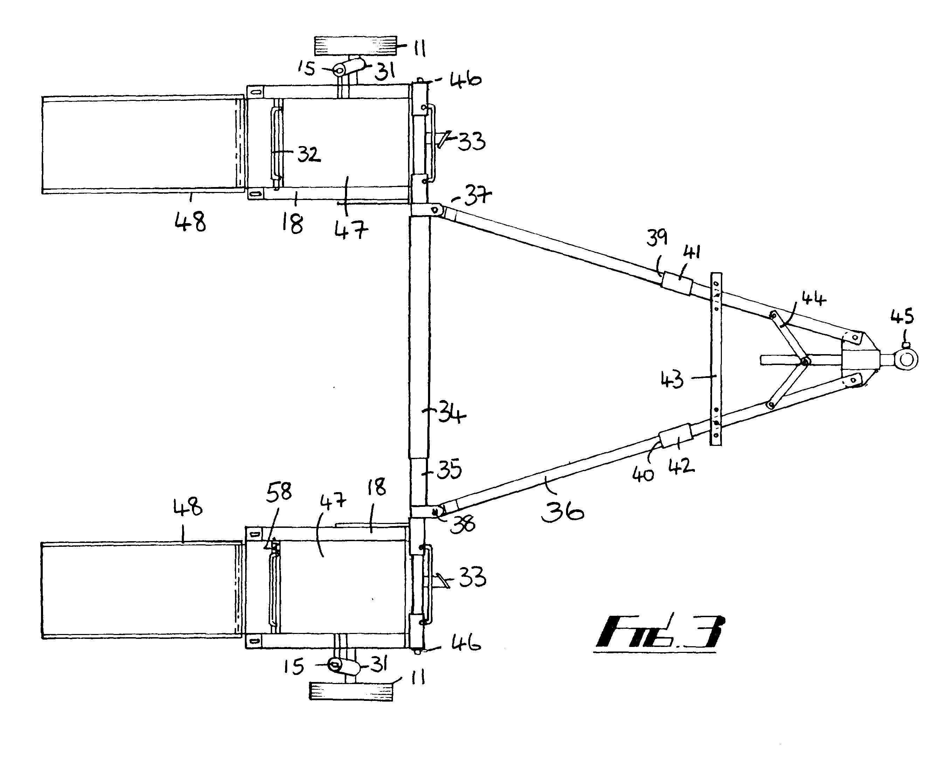

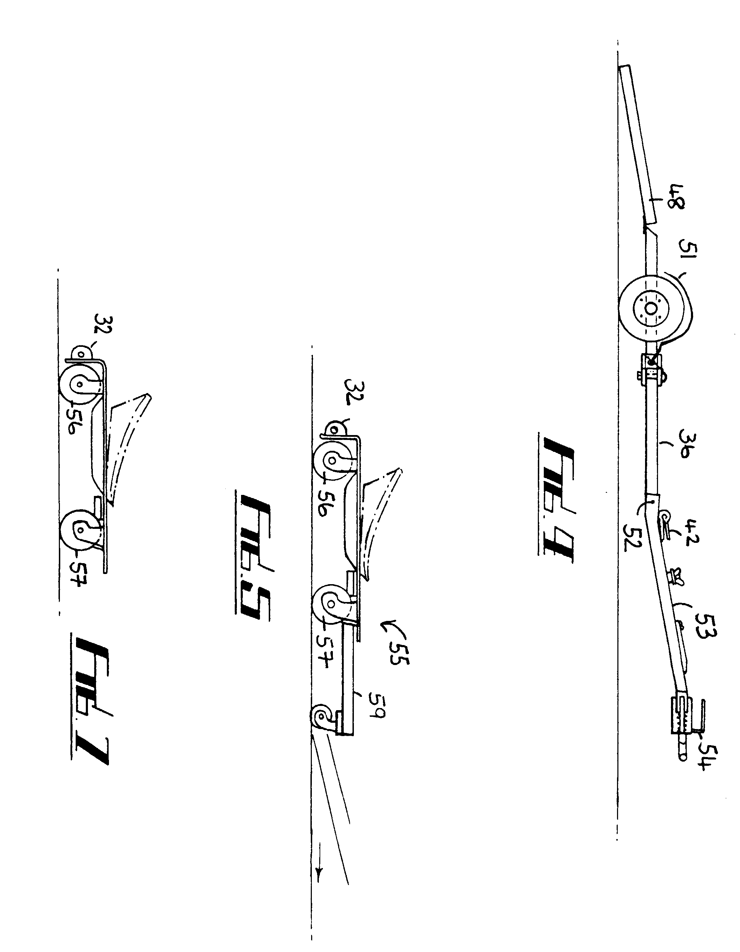

Referring to Figs. 1 and 2 of the drawings, the self steering wheel assembly 10 comprises a wheel 11, attached to which is a tube 12. The tube 12 has an angled upper end 14 and a king pin 15 is also secured within the tube 12 and extends upwardly from it. The king pin 15 is secured to the wheel 11 via the tube 12. A further tube 16, with a lower angled edge 17, nests against the edge 14 of the lower tube 12. The tube 16 is secured to a wheel pan 18 via an arm 19 welded to the wheel pan 18. The kin pin 15 and tubes 12,16 are inclined at an angle of 15° and the king pin centre line 21 meets the wheel centre line 22 at the road surface to equalise any turning moments around the intersection point or hinge line, which may be caused by any force exerted on the wheel by friction of the road surface etc. The tubes 12,16 and the king pin 15 have an outer king pin bush 31 (illustrated in Fig. 3) to protect the moving mechanism. Also, the wheel 11 is pre-set with a camber angle of 4° so that the tyre will wear evenly across its width.

Fig. 1 also shows one of the car wheels 29 of the damaged vehicle supported by the wheel pan 18 of the trailer of the vehicle recovery unit.

Fig. 2 shows the detail of the self centre-ing, self steering mechanism. As the trailer wheel 11 moves in a straight direction, towards 23, the king pin 15 and tubes 12,16 are still. When the wheel is forced to turn in either direction 24 or 25, the tube 12 rotates, thus the highest point 26 of the tube 12 moves along the inclined face 17 of the upper tube 16, forcing it to rise in direction 26. A hard nylon thrust washer 27 may be placed on one of the tube edges to reduce wear and tear on the angled edges as a result of abrasion. As a consequence of the wheel pan 18 being attached to the upper tube 16, the wheel pan 18 also rises in the direction 28. The king pin 15 cannot move down as it is connected to the wheel 11 which is pressing on the road surface 30.

The weight of the car 29 on the wheel pan 18 forces the king pin 15 and tubes 12,16 to turn back and resume the lowest position so that the angled faces of the tubes 14,17 nest again with one another and the wheel 11 resumes the straight ahead position 23 once the turn is complete.

Fig. 3 shows the self steering assembly together with the trailer component of the vehicle recovery unit. The trailer wheels 11 attached to the tubes 12 and king pins 15 are mounted on the side of two wheel pans 18. The tubes 12,16 and king pins 15 are surrounded by an outer king pin bush tube 31, to protect the tubes 12, 16 and pin 15 from damage.

Each wheel pan 18 has a rear wheel-chock 32 to prevent the wheel from slipping. Also a guide 33 is positioned at the front of the wheel pan for webbing straps which, in use, secures the damaged car wheels to the trailer. An R clip retaining pin 46 is positioned on the outside of the wheel pan. The base of the wheel pan is a chequer plate 47, which assists in gripping the wheel of the damaged vehicle in place.

An adjustable drawbar 34 allows the width of the trailer component to be altered via a telescopic action with an inner drawbar 35.

An A-frame 36 is detachable from the drawbar 34 at points 37,38,39 and 40 so that the trailer component can be dismantled and stored away easily.

The A-frame has two ratchet buckle tensioners 41,42 for tightening the webbing straps (not shown) which cradle the damaged vehicle wheels. The straps extend through the guide 33 at the front of the wheel pan 18 and are secured taut at 41 and 42. The A-frame also has a multi-positional crossbar 43 to suit different vehicle tracks.

At the apex of the A-frame is a slidable component 44 which assists in the multi-positioning of the A-frame. Finally, the eye type coupling at 45 has a shock absorber type coupling which is fitted with an over/run brake system.

Detachable ramps 48 are provided at the rear of the wheel pans to assist in the placement of the damaged vehicles front wheels on the wheel pans.

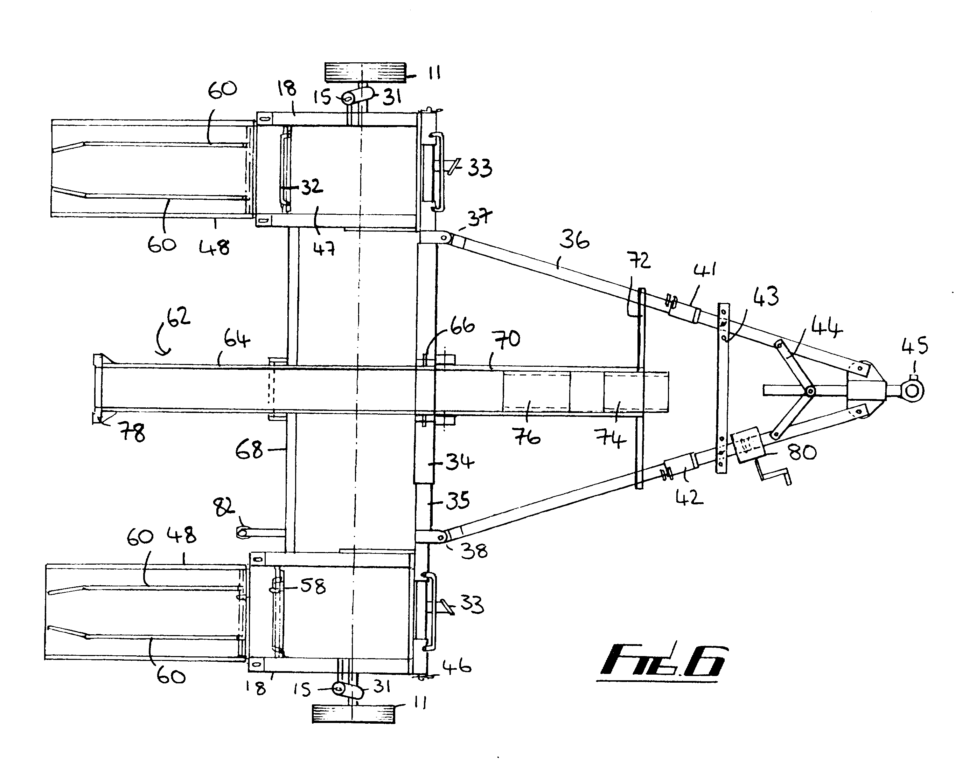

Fig. 4 shows the side view of a trailer unit, a trailer wheel being 18" in diameter and mudguards 51 attached to the wheel for protection. A detachable ramp 48 is attached to the back of the wheel pan. The A-frame 36 has a socket 52 and inclines along line 53 to the point of attachment 54 to a recovery tow vehicle (not shown). Along incline 53 of the A-frame, are positioned ratchet buckle fasteners 42 to secure the webbing (not shown) which assists to secure the wheel of the damaged vehicle to the trailer unit.

If the damaged car is not drivable, it can be winched up by a winch attachment (best illustrated in Fig. 6) and the car is secured by the webbing strap assemblies.

Fig. 5 shows a wheel skate 55 to load a vehicle with damaged transmission or a flat tyre and which cannot be wheeled up the detachable ramp. The wheel skate comprises two rear non-castoring wheels 56, preferably nylon wheels, 4" in diameter, and two front castoring wheels 57. A spring loaded shoot bolt 58 on the wheel pan 18, engages the chock 32 on the wheel skate to hold the skate on the vehicle. A telescopic tube 59 is placed at the front of the skates 55 to assist in climbing the ramp 48. Fig. 7 shows a modified wheel skate 51 in which the telescopic tube 59 is omitted.

In the embodiment of Fig. 6 the detachable ramp 48 is modified to include a pair of rails 60. In use the wheels 56, 57 of the wheel skate 55 engage the rails 60 permitting the skate 55 to be pushed up the ramp 48 without it coming off the ramp 48 and thereby direct the skate 55 (carrying the broken-down vehicle) to a central location on the wheel pan 18 of the trailer.

The trailer is further modified in that it carries a detachable motorcycle carrying attachment 62. The attachment 62 comprises a hinged rear channel or runway 64 which is pivotally mounted at 66 to the adjustable drawbar 34 and is supported by axle 68 which is detachably mounted between the wheel pans 18. The attachment 62 further comprises a front channel 70 mounted between the drawbar 34 and a detachable crossbar 72 across to the frame 36. The inside of the front channel 70 carries a front and rear pivotable chock 74 and 76.

In use the trailer is locked into its minimum width position by adjusting drawbars 34 and 35. The motorcycle attachment 62 is mounted on the trailer by placing channels 64, 70 across drawbars 34, 35 and connecting crossbar 72 to frame 36, and the axle 68 to the wheel pans 18. The rear channel 64 is inclined towards the ground until its end 78 touches the ground, a broken-down motorcycle can then be pushed by the gentle slope of rear channel 64 until its front wheel is locked by the pivotable chocks, 74, 76 located in the front channel 70.

Once the motorcycle is in place the rear channel is raised from the ground by a winch cable (not illustrated) extending between a detachable drawbar mounted winch 80 and lever 82 on axle 68. The motorcycle is then lashed down to secure it to the trailer.

If it is not possible to turn the wheel of the motorcycle, the wheel is lifted onto a wheel skate 55 (Fig. 7) and this can be used to manoeuver the motorcycle up the channels 64, 70. The chock 32 at the rear of skate 55 is then secured to rear chock 76 in the channel 70.

## Claims

1. A self steering wheel assembly which connects an individual wheel (11) of a vehicle to its body (18), comprising a member (12) which is adapted to be mounted to the wheel (11), and a member (16) which is adapted to be fixed to the body (18) with the members (12, 16) being pivotally connected at one side of the wheel (11) and with the pivotal axis (21) thereof being inclined to the vertical such that a theoretical extension to the pivotal axis (21) substantially intersects the longitudinal centre line of the wheel (11) at the road surface (30).

2. An assembly according to claim 1, wherein the members (12, 16) are shaped such that rotation of the member (12) connected to the wheel (11) causes the member (16) fixed to the body (18) to rise.

3. An assembly according to claim 1 or 2 wherein the members (12, 16) have correspondingly inclined surfaces (14, 17) adapted to nest against each other such that as one member (12) rotates, the highest point (26) of its angled surface (14) moves along the inclined surface (17) of the other member (16).

4. An assembly according to any one of the preceding claims, wherein a pin (15) secures one member (12) to the other (16), the pin (15) being fixed to one member (12) and being reciprocally connected to the other member (16).

5. An assembly according to any one of claim 4, wherein the pin lies along the pivotal axis and is inclined to provide a castor angle of 10° to 25°, and a pin inclination of 10° to 25° to the vertical.

6. A vehicle recovery unit utilising the self steering wheel assembly of any one of the preceding claims, comprising a trailer adapted to be towed by a recovery vehicle, wherein a self steering wheel assembly connects a wheel of the trailer to its body.

7. A unit according to claim 6, wherein the width of the trailer is adjustable.

8. A unit according to claim 6 or 7 wherein the trailer comprises a motorbike carrying attachment (62).

9. A unit according to claim 8 wherein the motorbike carrying attachment is detachable and comprises a channel adapted to receive the wheels of a motorcycle.

10. A unit according to claims 6 to 9, comprising a wheel skate (55) adapted to support the wheel (11) of a broken-down vehicle.

11. A unit according to claim 10, comprising at least one ramp (48) adapted to provide a gentle slope from the ground to the trailer, the ramp (48) having guide rails (60) for the wheel skate (55).
